# EUROPEAN PATENT APPLICATION

(11) **EP 0 999 222 A1**
(43) Date of publication of application: **10.05.2000**
(21) Application number: 98203706.1
(22) Date of filing: 02.11.1998
(51) Int. Cl.: C08B 37/00, C08B 31/18, C08B 15/02, C08B 15/06, C08B 37/18

(54) **Carbohydrate oxidation products**

(71) Applicant: NEDERLANDSE ORGANISATIE VOOR TOEGEPAST-NATUURWETENSCHAPPELIJK ONDERZOEK TNO, 2628 VK Delft (NL)
(72) Inventor: Besemer, Arie Cornelis, 3958 CC Amerongen (NL); Jetten, Jan Matthijs, 3701 JL Zeist (NL); Van Doren, Hendrik Arend, 3828 XB Hoogland (NL); Van der Lugt, Jan Pieter, 3824 AA Amersfoort (NL)
(74) Representative: de Bruijn, Leendert C.

(57) **Abstract**

A novel oxidation product derived from a carbohydrate containing 1,2-dihydroxyethylene groups in its repeating units, can be obtained by at least partially oxidising the 1,2-dihydroxyethylene groups of the carbohydrate to dialdehyde groups, and oxidising a part of the aldehyde groups to carboxylic acid groups. The oxidation product has a regular structure with alternating aldehyde groups and carboxyl groups in a ratio of about 1:1. It can be further transformed to an amino-substituted oxidation product by reductive amination of at least a part of the remaining aldehyde groups.

## Description

The present invention relates to novel oxidation products of carbohydrates and derivatives thereof, and to processes of preparing these.

Several procedures are known in the art to subject chemical species containing 1,2-dihydroxyethylene units to 'oxidative glycol cleavage', a carbon-carbon scission reaction which is accompanied by oxidation of the hydroxymethine groups to aldehydes or carboxylic acids. In polymeric carbohydrates, in which the 1,2-dihydroxyethylene units are usually part of a 5- or 6-membered ring, the carbon-carbon bond scissions do not lead to degradation of the polymeric chains. The best-known procedures for said conversions in carbohydrates are:
- sodium periodate oxidation to dialdehydes (see e.g. WO 95/12619), which, if so desired, can be followed by oxidation to the corresponding diacids under the influence of sodium chlorite and hydrogen peroxide, and
- direct conversion of carbohydrates to diacids under the influence of sodium hypochlorite and a catalytic amount of bromine (see e.g. EP-A-427349).

In principle, such conversions can be carried out with any carbohydrate containing 1,2-dihydroxyethylene units, but most of the work known in the art is restricted to dialdehyde starch and dialdehyde inulin, and dicarboxylic starch and dicarboxylic inulin, respectively. Dialdehyde derivatives of carbohydrates have been reported to be useful as additives in papermaking processes (wet-end strengthening); dicarboxylic derivatives of carbohydrates are useful due to their capacity to bind divalent metal ions, notably calcium and magnesium ions.

It was found now that in 'dialdehyde carbohydrates', i.e. carbohydrates in which the 1,2-dihydroxyethylene groups of the parent carbohydrate have been partly or completely converted to dialdehyde groups, one of the aldehyde groups can be selectively oxidised to a carboxyl group. The mono-carboxyl-monoaldehyde carbohydrate derivatives thus obtained have interesting properties and can be applied e.g. as temporary crosslinkers in polysaceharide solutions or suspensions or as reactive hydrophilic coatings. They are also versatile starting materials for further derivatisation, especially to amino derivatives, to obtain e.g. polymeric surfactants, emulsifiers or decoupling polymers. The carboxyl-aldehyde carbohydrates of the invention have a aldehyde to carboxyl ratio of between 25-75 and 80-20, especially between 40-60 and 75-25.

The present invention also includes a new process for the oxidation of aldehyde groups to carboxylic groups in carbohydrate derivatives, in which only a catalytic amount of molecular halogen is required. This novel process comprises the use of peracids for the (re)generation of the molecular halogen instead of sodium hypochlorite. It was found that the novel process, besides reducing the amount of halide produced, is also beneficiary to the properties of the partially oxidised products, in that a lower extent of degradation is observed. In addition, this process is considerably cheaper than the oxidation with sodium chlorite in the presence of hydrogen peroxide.

The catalytic amount of molecular halogen may be 0.2-40, preferably from 1 to 10 mole%, with respect to the amount of peracid. The halogen may be chlorine, bromine or iodine. The peracid may be any peralkanoic acid such as peracetic acid, perpropionic acid, perlauric acid etc., a substituted peralkanoic acid such as peroxytrifluoroacetic acid, an optionally substituted aromatic peracid such as perbenzoic acid or m-chloroperbenzoic acid, or an inorganic peracid such as perboric or persulphuric acid.

The oxidised carbohydrate according to the invention can be derived from any carbohydrate containing 1,2-dihydroxyethylene groups in its recurring units, which carbohydrate contains a relatively low level of reducing end groups. Such carbohydrates include non-reducing disaccharides and oligosaceharides, such as sucrose, raffinose, trehalose and similar oligosaceharides, and polysaccharides which are 1,2-, 1,4- or 1,6-linked. Examples include α-1,4-glucans (the "starch family"), β-1,4-glucans (cellulose), glucomannans and galactomannans (guar and locust bean gum), (arabino)-xylans (hemicellulose) and β-2,1- and β-2,6-fructans (inulin and levan). The starch-type carbohydrates, cellulose and inulin are preferred carbohydrates. Modifications of starch and other carbohydrates an also be used as starting materials, and comprise partially hydrolysed products, as well as physical and chemical modifications, including hydroxyalkyl, carboxyalkyl and similar derivatives. Short-chain carbohydrate derivatives, including monosaccharides, in which the reducing end groups have been protected, e.g. as glycosides, are also suitable starting materials.

After (partial) oxidation of the 1,2-dihydroxyethylene groups in a carbohydrate to obtain the corresponding dialdehyde derivative, this product is further oxidised by reacting it with molecular halogen, preferably bromine, in the presence of an oxidising agent such as hypochlorite or a suitable peracid, preferably peracetic acid, in an aqueous slurry or solution, at a pH of 3-7, preferably 4-6, and a temperature from 0 to 80°C, preferably from 0°C to ambient temperature, to obtain a product, in which 0.1-1.5, preferably 0.6-1.2, of the aldehyde functions in each oxidised 1,2-dihydroxyethylene group have been converted to carboxylic acid groups. The reaction may be carried out in a closed system to avoid loss of halogen by evaporation. The carboxylic acid groups may be present in the product in the form of the free acids, their carboxylate salts (e.g. with metal or (substituted) ammonium ions), as 4-7 membered lactones, or as mixtures thereof. The remaining aldehyde groups may be present as such, in the form of their hydrates or as (hemi-)acetals or (hemi-)aldals.

Using the process of the invention, a distinct decrease in the reaction rate is observed when the degree of oxidation reaches about 50%, i.e. when about 50% of the available aldehyde groups have been converted to carboxylic groups. It is believed that the oxidation takes place in such a manner that one of the aldehyde functions in each monomeric unit reacts first, whereas the oxidation of the other aldehyde function proceeds more slowly, most likely due to the formation of stable cyclic hemi-acetals. As a result, the reaction can be stopped conveniently at this stage, and a product is obtained in which approximately equal amounts of aldehyde and carboxylic functions are present.

The product has as a characteristic feature that essentially all dialdehyde functions have been converted to mono-aldehyde-monocarboxylic functions. This in the case of amylose, which has been convened fully to dialdehyde amylose, oxidation according to the process of the present invention will lead to a structurally regular product with alternating aldehyde and carboxylic groups. So far, it has been notoriously difficult to obtain structural regularity in carbohydrates derivatives. The products of the invention provide novel material properties.

The oxidised carbohydrates of the present invention can also serve as starting materials for a range of derivatives. The reaction of the residual aldehyde groups with amines is of particular interest and leads to products which are structurally quite different from reaction products of amines and dialdehyde functions. In the latter case, when primary amines are used, each amine group will usually react with both aldehyde groups in the dialdehyde moiety, supposedly leading to seven-membered rings incorporating one nitrogen atom (*see* Guthrie, *Advances in Carbohydrate Chemistry,* Vol. 16, 1961). In the case of the oxidised carbohydrates of the present invention, however, the remaining aldehyde function of each mono-aldehyde-mon-carboxylic moiety will react with an amine group, leading to an acyclic moiety. The amines which can be coupled include primary and secondary amines having the formula HNR¹R², with R¹ and R² as defined in the claims. Examples of amines are ammonia, alk(en)ylamines such as methyl, allyl, butyl, decyl, hexadecyl or octadecenyl, dialkyl amines, cyclic amines such as pyrrolidines, piperidines, morpholines, thiazolines, imidazoles, tetrazoles, triazines etc., carboxy-substituted amines such as glycine, lysine or other α-amino acid, or imino-diacetic acid, hydroxy-substituted amines such as diethanolamine, and diamines and polyamines such as hexamethylenediamine, and further other amino-functional molecules that can react with aldehyde functions such as hydrazine, hydrazides, hydrazones, hydroxylamine, amidines, guanidines, isothiourea's and the like. The latter can be used for crosslinking the carbohydrates. Coupling of the amines to the aldehyde function results primarily in imines, which are not thermally and hydrolytically stable, and are, therefore, preferably reduced to the corresponding amines using conventional reducing agents such as borohydrides. The reductive amination can also be performed in a single step, using reducing agents such as borohydrides or using pressurised hydrogen in the presence of a metal catalyst. These amination reactions as such are well-known to the skilled person.

### Example 1

### Preparation of a starch derivative containing approximately equivalent amounts of aldehyde and carboxylic functions (Monoaldehyde monocarboxylic starch, MACS)

### 1a. Preparation of dialdehyde starch (DAS)

122.5 grams (0.76 mole, based on anhydroglucose) of starch (weight corrected for dry matter content) are suspended in 500 ml of demineralized water. The suspension is brought to pH 4.5 and cooled to 5°C. Sodium periodate (165 g, 0.77 mole) is added and the suspension is stirred at 5°C in the dark for 20 hours. The dialdehyde starch obtained in this fashion is isolated by filtration. The crude product is washed extensively with water until iodate can no longer be detected by reaction with potassium iodide.

### 1b. Preparation of monoaldehyde monocarboxylic starch (MACS)

The DAS thus prepared was oxidized further using bromine/peracetic acid. In order to oxidize approximately 50% of the aldehyde groups present, 0,76 mole of peracetic acid (0.584 M solution, 1,3 l) was added in 14 portions to the well-stirred suspension of DAS in 1 l of water, to which 12 g (0.12 mole, corresponding to 0.06 mole of Br₂) of sodium bromide had been added. This amount was sufficient to effect complete conversion of peracetic acid to acetic acid through oxidation of bromide to bromine, which is the oxidizing species in the reaction. The pH was kept at 5 (addition of 0.1 N sodium hydroxide solution, pH-stat) throughout the reaction and each consecutive portion of peracetic acid was added after the suspension/solution had turned colourless. Upon completion of the reaction, the solution was desalinated by ultra filtration, using a membrane with a cut-off MW 5000, and freeze-dried.

### Characterisation of MACS

**Carboxylic acid content:** Desalinated MACS was dissolved in a small volume of demineralised water and eluted over a cation-exchange resin (H⁺-form). The eluate was freeze-dried and titrated with sodium hydroxide solution. The carboxylic content was found to be about 0.7 carboxylic groups per monomeric unit.
**Aldehyde content:** An excess of hydroxylammonium chloride was reacted with desalinated MACS. The hydrochloric acid that was liberated upon reaction with the aldehyde functions was titrated with sodium hydroxide solution. The aldehyde content was found to be about 1.2 aldehyde functions per monomeric unit.

The ratio of aldehyde to carboxylic acid is therefore approximately 60-40.

## Claims

1. An oxidised carbohydrate derived from a carbohydrate containing 1,2-dihydroxyethylene groups in its repeating units, the 1,2-dihydroxyethylene groups having at least partially been oxidised to dialdehyde groups, and a part of the aldehyde groups having been oxidised to carboxylic acid groups, the ratio between aldehyde groups and carboxyl groups being between 25-75 and 80-20.

2. An oxidised carbohydrate according to claim 1, containing on average 0.1-1.5 carboxyl groups and 0.5-1.9 aldehyde groups per oxidised 1,2-dihydroxyethylene group.

3. An oxidised carbohydrate according to claim 2, containing on average 0.5-1.3 carboxyl groups and 0.7-1.5 aldehyde groups per oxidised 1,2-dihydroxyethylene group.

4. An oxidised carbohydrate according to any one of claims 1-3, containing on average 0.1-1.2 carboxyl groups and 0.3-1.2 aldehyde groups per repeating unit.

5. An oxidised carbohydrate according to claim 1 or 2, wherein the carbohydrate is starch, amylose or amylopectin or a modification thereof.

6. An oxidised carbohydrate according to claim 1 or 2, wherein the carbohydrate is cellulose or a modification thereof.

7. An oxidised carbohydrate according to claim 1 or 2, wherein the carbohydrate is a 2,1-fructan.

8. A process for producing an oxidised carbohydrate according to any one of claims 1-7, comprising oxidising a dialdehyde carbohydrate obtainable by oxidising a carbohydrate containing 1,2-dihydroxyethylene groups in its repeating units, the oxidation of the dialdehyde carbohydrate being performed with molecular halogen, in particular molecular with bromine.

9. A process according to claim 8, wherein the oxidation with molecular halogen is performed at a pH between 3 and 7.

10. A process according to claim 7 or 8, wherein the molecular halogen is produced in situ by reaction of halide with a carboxylic peracid.

11. A process for producing an oxidised, amino-substituted carbohydrate, comprising reductively aminating residual aldehyde groups in the oxidised carbohydrate obtained by the process according to any one of claims 8-10.

12. An amino-substituted oxidation product derived from a carbohydrate containing 1,2-dihydroxyethylene groups in its repeating units, containing on average 0.1-1.5 carboxyl groups and 0.3-1.9 substituted amine groups per oxidised 1,2-dihydroxyethylene group.

13. An amino-substituted oxidation product according to claim 12, containing on average 0.1-1.2 carboxyl groups and 0.3-1.2 substituted amino groups per repeating unit.

14. An amino-substituted oxidation product according to claim 12 or 13, wherein said substituted amino group has the formula -NR¹R², wherein R¹ represents hydrogen, a C₁-C₂₀ alkyl, alkenyl or alkynyl group optionally substituted with carboxy, hydroxy, C₁-C₁₂ alkoxy, amino, carbamoyl and/or aryl, including natural and synthetic amino acid residues, and R² represents hydrogen, amino, substituted amino, hydroxy, alkoxy, or a C₁-C₁₂ alkyl, alkenyl or alkynyl group optionally substituted with carboxy, hydroxy, C₁-C₁₂ alkoxy, amino and/or carbamoyl, or a substituted iminomethyl group, or R¹ and R², together with the nitrogen atom to which they are bound, represent a three- to seven-membered heterocyclic system, optionally containing one or more further heteroatoms selected from nitrogen, oxygen and sulphur and optionally substituted with carboxy, hydroxy, oxo, C₁-C₁₂ alkyl, alkenyl, alkynyl or alkoxy, amino, carbamoyl and/or aryl.
